# EUROPÄISCHE PATENTSCHRIFT

(11) **EP 2 620 548 B1**
(45) Veröffentlichungstag und Bekanntmachung des Hinweises auf die Patenterteilung: **04.11.2015**
(21) Anmeldenummer: 13000148.0
(22) Anmeldetag: 11.01.2013
(51) Int. Cl.: E01C 19/28, E02F 9/16, E01C 19/23, B62D 33/06

(54) **Baumaschine mit schwingungsentkoppeltem Fahrstandaufbau und Anhängeeinrichtung**
Construction machine with vibration-decoupled platform structure and a trailer device
Engin avec structure de cabine à oscillations découplées et dispositif d'attelage

(30) Priorität: 24.01.2012 DE 102012001348
(43) Veröffentlichungstag der Anmeldung: 31.07.2013
(73) Patentinhaber: BOMAG GmbH, 56154 Boppard (DE)
(72) Erfinder: Rötsch, Helmut, 56288 Beltheim (DE); Hammen, Björn, 55469 Simmern (DE); Bender, Matthias, 55497 Ellern (DE)
(74) Vertreter: Heidler, Philipp

(56) Entgegenhaltungen:
- JP-A- 2002 266 311
- JP-A- 2011 094 444
- US-A- 4 964 753
- US-A1- 2009 085 377

## Beschreibung

Die Erfindung betrifft eine Baumaschine gemäss dem Oberbegriff des Patentanspruchs 1.

Es ist bekannt, eine Baumaschine mit einem Fahrstandaufbau (der beispielsweise einen Fahrersitz, ein Lenkrad und weitere Bedienelemente zur Steuerung der Baumaschine aufweist) auszustatten, der gegenüber dem Maschinenrahmen schwingungsentkoppelt bzw. elastisch abgekoppelt ist, um die Schwingungsbelastung auf den Fahrer beziehungsweise Maschinenbediener während des Arbeitsbetriebs zu verringern. Hierzu ist der Fahrstandaufbau im Ganzen auf wenigstens einem Dämpfungselement, beispielsweise einem Gummilager, am Maschinenrahmen gelagert. Ein bekanntes Bauprinzip sieht eine über mehrere Dämpfungselemente mit dem Maschinenrahmen verbundene Fahrstandgrundplatte vor, die die weiteren Komponenten des Fahrstandaufbaus trägt. Die Grundplatte ist dabei besonders häufig über insgesamt vier Dämpfungselemente am Maschinenrahmen gelagert. Eine Schwingungsdämpfung des Fahrstandaufbaus ist insbesondere bei solchen Baumaschinen besonders relevant, bei denen wenigstens eine schwingende oder vibrierende Arbeitseinrichtung vorhanden ist, wie es beispielsweise bei Tandemwalzen mit in wenigstens einer Bandage gelagerter Erregereinrichtung der Fall ist. Die Schwingungsentkopplung beziehungsweise Schwingungsdämpfung ist entsprechend in der Weise ausgebildet, dass sie zumindest die Übertragung der durch die Erregereinrichtung in die Maschine eingeleiteten Schwingungen zum Fahrstandaufbau dämpft. Eine solche Schwingungsdämpfung ist beispielsweise in der amerikanischen Patentanmeldungsveröffentlichung US 2009/0085377 A1 näher beschrieben.

Im Baustellenbetrieb treten häufig Situationen auf, in denen eine gattungsgemäße Baumaschine von einer Stelle zu einer anderen Stelle versetzt werden soll. Dies ist beispielsweise zu Transportzwecken und bei Bausituationen mit beschränktem Zugang und/oder engen räumlichen Verhältnissen der Fall. Insbesondere bei kleineren Baumaschinen, beispielsweise bis zu einem Gesamtgewicht von kleiner 6t, hat sich dabei das Anheben und Versetzen der Baumaschine, beispielsweise mit Hilfe eines Krans oder eines Baggers, besonders bewährt. Die entsprechenden Baumaschinen weisen dazu häufig eine Anhängeeinrichtung, wie insbesondere eine Transportlasche oder dergleichen, auf, um die Baumaschine an eine Anhebevorrichtung, wie beispielsweise die Kette eines Krans, anhängen zu können. Aus dem Stand der Technik sind daher direkt am Maschinenrahmen angeschraubte oder angeschweißte Transportlaschen bekannt, an denen Hebekräfte aufgebracht werden können, wie beispielsweise in der japanischen Patentanmeldungsveröffentlichung JP 2011-94444 A (für eine Straßenwalze) beschrieben und der amerikanischen Patentschrift US 4,964,753 (ebenfalls für eine Straßenwalze) beschrieben. Nachteilig hieran ist, dass diese Transportlaschen im Hinblick auf Zugänglichkeit und/oder Krafteinleitung häufig nur an ungünstigen Stellen am Maschinenrahmen angeordnet werden können. Beispielsweise ist aus der japanischen Patentanmeldungsveröffentlichung JP 2002-266311 A eine Aufhängung für eine Straßenwalze bekannt, bei der mehrere Laschen an den Außenseiten der Maschine oberhalb der Bandagen angebracht sind. Ferner sind bei leichteren Baumaschinen direkt mit dem Maschinenrahmen verbundene Gurtbänder bekannt, die jedoch regelmäßig auf Materialintegrität geprüft werden müssen, was mit Aufwand und laufenden Kosten verbunden ist, insbesondere falls ein Austausch der Gurtbänder erforderlich ist.

Ideal für die Anbringung der Anhängeeinrichtung ist insbesondere der Bereich des Fahrstandaufbaus. Dieser ist von außen gut zugänglich und liegt häufig über oder sehr nah am Massenschwerpunkt der Baumaschine, so dass ein Anheben mittels einer Einpunktaufhängung möglich ist. Ein direktes Anheben der Baumaschine über den abgekoppelten Fahrstand selbst war allerdings bisher nicht möglich. Ein Anheben der Baumaschine über den Fahrstandaufbau führte stets dazu, dass der Fahrstandaufbau den Maschinenrahmen über das wenigstens eine Dämpfungselement hochzog, so dass erhebliche Zugbelastungen des wenigstens einen Dämpfungselementes auftraten. Dies führte letztendlich zu einer Überbelastung bis hin zur Zerstörung des wenigstens einen Dämpfungselementes. Entsprechend wurde beispielsweise der Transportgurt zwar durch den Fahrstandaufbau nach oben hin durchgeführt. Die Anlenkung des Transportgurtes an der Baumaschine erfolgte allerdings direkt am Rahmen der Baumaschine und nicht am auf dem Maschinenrahmen gelagerten Fahrstandaufbau. Besonders ideal zur Anbringung der Aufhängung ist die Lenkträgersäule der Baumaschine geeignet, da sie sehr gut zugänglich und zudem so am Massenschwerpunkt der Baumaschine gelagert ist, dass sie sich für eine Einpunktaufhängung eignet. Da die Lenkträgersäule allerdings im Hinblick auf den Bedienkomfort ebenfalls schwingungsentkoppelt am Fahrstandaufbau befestigt ist, war es aus den oben genannten Gründen bisher ebenfalls nicht möglich, die Aufhängung an der Lenkträgersäule zu realisieren.

Der Erfindung liegt die Aufgabe zugrunde, eine Baumaschine der eingangs genannten Art anzugeben, die die mit dem Stand der Technik einhergehenden Nachteile nicht oder zumindest nur in vermindertem Umfang aufweist . Dabei soll insbesondere eine leicht zugängliche und verschleißarme Möglichkeit angegeben werden, eine Hebevorrichtung an eine Baumaschine zum Anheben und Versetzen der Baumaschine anzukoppeln.

Diese Aufgabe wird gelöst durch eine erfindungsgemäße Baumaschine und insbesondere eine Tandemwalze mit den Merkmalen des unabhängigen Anspruchs. Bevorzugte Weiterbildungen sind in den abhängigen Ansprüchen angegeben.

Der wesentliche Aspekt der Erfindung liegt darin, dass eine Möglichkeit angegeben wird, eine gattungsgemäße Baumaschine über eine direkt am Fahrstandaufbau angeordnete Anhängeeinrichtung anzuheben, ohne dass dabei das wenigstens eine Dämpfungselement überlastet wird. Dabei liegt der Erfindung die Erkenntnis zugrunde, dass einerseits eine gewisse Beweglichkeit des Fahrstandaufbaus gegenüber dem Rahmen im Arbeitsbetrieb möglich sein muss, um eine effektive Schwingungsentkopplung zu erreichen. Das heißt, der Fahrstandaufbau muss gegenüber dem Rahmen im Arbeitsbetrieb in einem gewissen Bereich relativbeweglich sein. Andererseits ist dieser Bereich in der Regel wesentlich kleiner als der Auslenkungsbereich des Fahrstandaufbaus gegenüber dem Rahmen (zumindest in Anheberichtung der Baumaschine), ab dem eine irreversible Schädigung des wenigstens einen Dämpfungselementes auftritt. Die Erfindung schlägt hierzu nun vor, dass eine Wegbegrenzungseinrichtung vorhanden ist, die den Verstellweg des Fahrstandes gegenüber dem Maschinenrahmen begrenzt, und in der Weise ausgebildet ist, dass sie beim Anheben der Baumaschine die Belastung des wenigstens einen Dämpfungselementes über die Anhängeeinrichtung begrenzt und einen direkten Kraftfluss zwischen dem Fahrstandaufbau und dem Maschinenrahmen ermöglicht. Die Begrenzungseinrichtung ist dabei so beschaffen, dass sie zumindest bei einer Anhebebewegung der Baumaschine die Relativbeweglichkeit des Fahrstandaufbaus gegenüber dem Maschinenrahmen in Anheberichtung begrenzt. Dadurch wird eine übermäßige Zugbelastung des Dämpfungselementes beim Anheben der Baumaschine verhindert.

Die erfindungsgemäße (Weg-)Begrenzungseinrichtung vereint somit gleich mehrere Eigenschaften. Einerseits erlaubt sie in einem begrenzten Bereich eine Relativbewegung zwischen dem Fahrstandaufbau und dem Maschinenrahmen. In diesem begrenzten Bereich kann das wenigstens eine Dämpfungselement die Schwingungsübertragung vom Maschinenrahmen auf den Fahrstandaufbau somit dämpfen. In diesem Fall findet eine Lagerkraftübertragung vom Maschinenrahmen auf den Fahrstandaufbau somit über das wenigstens eine Dämpfungselement statt. Wird das Dämpfungselement allerdings stärker belastet, beispielsweise beim Anheben der Baumaschine über den Fahrstandaufbau, wenn der Fahrstandaufbau den Maschinenrahmen über das Dämpfungselement hochzieht, verhindert die Begrenzungseinrichtung andererseits eine übermäßige Zugbelastung des Dämpfungselementes in der Weise, dass nunmehr ein direkter Kraftfluss zwischen dem Maschinenrahmen und dem Fahrstandaufbau, insbesondere über Teile der Begrenzungseinrichtung selbst, erfolgt und dadurch eine Überlastung des wenigstens einen Dämpfungselementes verhindert wird. Die Begrenzungseinrichtung ist mit anderen Worten in der Weise ausgebildet, dass sie ausgehend von der Standposition der Baumaschine eine Relativbewegung zwischen dem Fahrstandaufbau und dem Maschinenrahmen zu Dämpfungszwecken im Arbeitsbetrieb in einem bestimmten Bereich zulässt und bei einem Überschreiten dieses Bereiches zumindest in Anheberichtung, insbesondere aufgrund einer Zugbeanspruchung des Fahrstandaufbaus beim Anheben der Baumaschine, das wenigstens eine Dämpfungselement zur Kraftübertragung vom Maschinenrahmen zum Fahrstandaufbau zumindest zu wesentlichen Teilen umgeht und einen direkten Kraftfluss zwischen dem Maschinenrahmen und dem Fahrstandaufbau herstellt. Insgesamt stellt die Begrenzungseinrichtung somit ein Mittel zur Wegbegrenzung des Verstellweges zwischen dem Fahrstandaufbau und dem Maschinenrahmen zumindest in Anheberichtung der Baumaschine dar, wobei die Wegbegrenzung in der Weise ausgebildet ist, dass der mögliche Verstellbereich kleiner ist als eine das wenigstens eine Dämpfungselement über den üblichen Verschleiß hinaus schädigende Verstellung aufgrund einer übermäßigen Zugkraftbelastung. Damit ermöglicht die Erfindung eine Anbringung der Aufhängung einer Baumaschine direkt am Fahrstandaufbau, bzw. sogar direkt an der Lenkträgersäule, die aufgrund ihrer Lagerung im Massenschwerpunkt besonders gut zum Anheben der Baumaschine geeignet ist, obwohl der Fahrstandaufbau und die Lenkträgersäule schwingungsentkoppelt auf dem Maschinenrahmen angeordnet sind.

Dabei kommen grundsätzlich eine Vielzahl verschiedener konkreter Ausführungsformen der Begrenzungseinrichtung in Betracht. Idealerweise ist die Begrenzungseinrichtung beispielsweise zumindest teilweise zwischen dem Maschinenrahmen und dem Fahrstandaufbau angeordnet. Diese Positionierung der Begrenzungseinrichtung ist insofern vorteilhaft, als dass dort besonders effektiv eine Bewegungsbegrenzung zwischen dem Maschinenrahmen und dem Fahrstandaufbau realisiert werden kann.

Auch die spezifische Ausbildung der Begrenzungseinrichtung kann in einem breiten Bereich variiert werden, solange die vorstehend angeführten Wirkungen der Begrenzungseinrichtung noch erhalten werden. Um eine hohe Funktionssicherheit zu ermöglichen, arbeitet die Begrenzungseinrichtung bevorzugt rein mechanisch, wobei grundsätzlich auch nicht mechanische Schritte und oder Mittel möglich sind, die ebenfalls von der Erfindung mit umfasst sind. Die Begrenzungseinrichtung kann beispielsweise eine, insbesondere zwischen Maschinenrahmen und dem vom diesem schwingungsentkoppelten Fahrstandaufbau wirksame, Formschlusskupplung umfassen, die beim Anheben der Baumaschine über die Anhängeeinrichtung durch Herbeiführung eines Formschlusses den direkten Kraftfluss zwischen dem Fahrstandaufbau und dem Maschinenrahmen über die Formschlusskupplung und unter Umgehung einer weiteren Belastung des Dämpfungselementes ermöglicht. Eine Formschlusskupplung zeichnet sich erfindungsgemäß allgemein dadurch aus, dass sie zwei Elemente umfasst, die zueinander lösbar in Formschluss bringbar sind, wobei im formgeschlossenen Zustand eine direkte Kraftübertragung vom Maschinenrahmen zum Fahrstandaufbau (über die Formschlusskupplung, sofern diese nicht selbst Teil des Maschinenrahmens und des Fahrstandaufbaus ist), zumindest in Anheberichtung der Baumaschine, erfolgt. Durch den über die Formschlusskupplung im Lastzustand ermöglichten direkten Kraftfluss zwischen dem Fahrstandaufbau und dem Maschinenrahmen kann eine an einer beispielsweise als Transportlasche ausgebildeten Anhängevorrichtung, die am Fahrstandaufbau befestigt ist, aufgebrachte Hebekraft unter Umgehung der Dämpfungselemente direkt in den Maschinenrahmen eingeleitet werden. Im normalen Betriebszustand der Baumaschine ist die Formschlusskupplung nicht im Eingriff, wodurch der Fahrstandaufbau in bekannter Weise vom Maschinenrahmen elastisch abgekoppelt ist und im Maschinenrahmen auftretende Schwingungen gegenüber dem Fahrstandaufbau durch das wenigstens eine Dämpfungselement gedämpft sind.

Zentraler Bestandteil der Formschlusskupplung sind somit wenigstens zwei für den Formschluss ausgelegte Elemente. Der Formschluss kann dabei über ein Eingreifen des einen Elementes in das andere Element erfolgen, wie es beispielsweise bei entsprechend ausgebildeten Klauen der Fall ist. Besonders funktionszuverlässig und einfach in der Herstellung sind allerdings Formschlusselemente, die durch einen geeigneten Anschlag erhalten werden, gegen den das andere Element, zumindest in eine Bewegungsrichtung, anschlägt und dadurch an einer Fortsetzung der Verstellbewegung gehindert wird. Bevorzugt weist die Formschlusskupplung der erfindungsgemäßen Baumaschine somit wenigstens einen ersten Anschlag und wenigstens einen zweiten Anschlag beziehungsweise ein Anschlagelement auf, die zueinander in der Weise ausgebildet sind, dass der zweite Anschlag am ersten Anschlag beim Anheben der Baumaschine anschlägt und eine weitere Relativbewegung des Fahrstandaufbaus zum Maschinenrahmen in Anheberichtung verhindert. Diese Art der Formschlusskupplung wirkt somit im wesentlichen durch eine Verstellwegbegrenzung des einen Anschlag gegenüber dem anderen Anschlag in Anheberichtung der Baumaschine. Die Anheberichtung der Baumaschine ist dabei für die einzelnen Elemente der Baumaschine, insbesondere Maschinenrahmen und Fahrstandaufbau, diejenige Richtung, in die sich die jeweiligen Elemente beim Anheben der Maschine, insbesondere auch zueinander, bewegen. Bei einem Anschlag kann es sich beispielsweise um eine Durchgangsöffnung handeln und bei dem anderen Anschlag um einen durch die Durchgangsöffnung hindurchgeführten Anschlagbolzen. Die Begriffe Anschlag und Anschlagelement sind dabei vorliegend im Wesentlichen funktional zu verstehen und bezeichnen insgesamt zwei beim Anheben der Baumaschine aneinander anschlagende jeweils einen Anschlag umfassende Elemente.

Ideal ist es dabei, wenn die Formschlusskupplung einen Anschlag am Fahrstandaufbau und einen Anschlag beziehungsweise Gegenanschlag am Maschinenrahmen umfasst und direkt aneinander anschlagen. Es ist aber auch möglich, dass sowohl am Fahrstandaufbau als auch am Maschinenrahmen jeweils ein Anschlag vorhanden ist, die über ein Zwischenelement funktional miteinander gekoppelt werden können. In diesem Fall umfasst die Formschlusskupplung weiter wenigstens das Zwischenelement, das zum Anschlagen gegen beide Anschläge beim Anheben der Baumaschine ausgebildet ist und dadurch somit streng genommen einen doppelten Formschluss (Anschlag Maschinenrahmen zu Zwischenelement und Zwischenelement zur Anschlag Fahrstandaufbau) ermöglicht und im anschlagenden Zustand eine weitere Relativbewegung des Fahrstandaufbaus zum Maschinenrahmen sperrt. Bei dieser Ausführungsform schlagen somit die Formschlusselemente, die am Maschinenrahmen und am Fahrstandaufbau angeordnet sind, nicht direkt aneinander an, sondern jeweils am Zwischenelement, das entsprechend als Brückenelement zwischen den Formschlusselementen des Maschinenrahmens und des Fahrstandaufbaus fungiert. Der Kraftfluss zwischen dem Maschinenrahmen und dem Fahrstandaufbau beim Anheben der Baumaschine erfolgt bei hergestelltem Formschluss somit über das Zwischenelement.

Bevorzugt ist wenigstens ein Anschlag des Maschinenrahmens und/oder des Fahrstandaufbaus in einen vom jeweiligen Tragteil (dasjenige Teil, das den Halteschenkel trägt) vorstehenden Halteschenkel integriert. Der fest mit dem Maschinenrahmen oder dem Fahrstandaufbau verbundene Halteschenkel zeichnet sich im wesentlichen somit dadurch aus, dass er räumlich vom Fahrstandaufbau oder vom Maschinenrahmen vorsteht und andererseits eine Haltefunktion zur Wegbegrenzung der Relativbewegung zwischen dem Maschinenrahmen und dem Fahrstandaufbau als Teil der Formschlusskupplung erfüllt. Dazu ist bevorzugt eine Bolzendurchgangsöffnung in den Halteschenkel integriert, durch die ein Anschlagbolzens durchführbar ist. Ideal ist es dabei, wenn sowohl am Fahrstandaufbau als auch am Maschinenrahmen einander zumindest teilweise überlappend jeweils ein Halteschenkel mit jeweils einer Bolzendurchgangsöffnung angeordnet ist, wobei beide Bolzendurchgangsöffnungen zumindest in einem Teilbereich einander überlagernd angeordnet sind. Letzteres ermöglicht es, ein linear erstrecktes Zwischenelement, insbesondere einen Anschlagbolzen, durch beide Bolzendurchgangsöffnungen hindurch zu führen. Über den durch beide Bolzendurchgangsöffnungen hindurch geführten Anschlagbolzen wird die Verstellwegbegrenzung erhalten in der Weise, dass er (zweiter Anschlag) beim Anheben der Baumaschine am Rand zumindest einer Bolzendurchgangsöffnung (erster Anschlag) anschlägt. Auf diese Weise gelingt eine besonders effiziente Begrenzung der Maximalzugbelastung auf das wenigstens eine Dämpfungselement beim Anheben der Baumaschine. Der Anschlagbolzen ist ferner bevorzugt in der Weise angeordnet, dass seine Bolzenachse senkrecht zur Kraftrichtung der Anhebekraft verläuft, so dass im formgeschlossenen Zustand im Wesentlichen Scherkräfte am Anschlagbolzen lasten. Die Bolzenachse verläuft entsprechend bevorzugt in einer horizontalen Ebene.

Der Durchmesser wenigstens einer Bolzendurchgangsöffnung ist dabei bevorzugt größer als der Durchmesser des durch die Bolzendurchgangsöffnung geführten Anschlagbolzens ausgebildet, so dass der Bolzen in dieser Bolzendurchgangsöffnung begrenzt bewegbar (zumindest in der Ebene der Bolzendurchgangsöffnung) gelagert ist und erst beim Anheben der Baumaschine an den Rand der Bolzendurchgangsöffnung anschlägt. Durch dieses Anschlagen wird der Formschluss erhalten und eine weitere Verstellbewegung des Fahrstandaufbaus gegenüber dem Maschinenrahmen beim Anheben der Baumaschine unterbunden. Der Durchmesser der jeweiligen Bolzendurchgangsöffnung ist dabei besonders bevorzugt umlaufend größer ausgebildet als der Durchmesser des Anschlagbolzens. Auf dieser Weise ist eine Relativbewegung zwischen dem Maschinenrahmen und dem Fahrstandaufbau in besonders vielen Raumrichtungen und zumindest von der Mittelposition in alle Richtung in der Ebene der Bolzendurchgangsöffnung möglich, was eine effektive Schwingungsdämpfung durch das wenigstens eine Dämpfungselement ermöglicht. Die Spaltbreite zwischen dem Anschlagbolzen und der Innenwand der Bolzendurchgangsöffnung ist dabei die entscheidende Größe zur Festlegung, wie weit der Fahrstandaufbau gegenüber dem Maschinenrahmen relativbeweglich ist. Die Spaltbreite sollte dabei grundsätzlich so bemessen sein, dass einerseits der Dämpfungsvorgang zur Schwingungsentkopplung durch die Formschlusskupplung nicht behindert wird und andererseits der Formschluss rechtzeitig vor einer Überbelastung des wenigstens einen Dämpfungselementes beim Anheben der Baumaschine eintritt. Die Spaltbreite beträgt im praktischen Einsatz häufig wenige Millimeter und liegt beispielsweise für eine Tandemwalze im Bereich von 1 bis 10 mm..

Grundsätzlich kann die konkrete Ausbildung der Bolzendurchgangsöffnung in mannigfaltiger Weise variiert werden. Ideal ist beispielsweise eine kreisförmige beziehungsweise scheibenartige Ausführung. Häufig kann es jedoch erwünscht sein, dass verschiedene Relativstellungen zwischen dem Maschinenrahmen und dem Fahrstandaufbau oder zumindest Elementen von diesen möglich sind. In diesem Zusammenhang hat sich die Verwendung einer oder mehrerer Bolzendurchgangsöffnungen bewährt, die eine schlüssellochförmige oder eine hantelförmige Kontur aufweisen. Dadurch sind Relativbewegungen des Anschlagbolzens in Längsrichtung der Bolzendurchgangsöffnung möglich, ohne gleichzeitig den für die Schwingungsentkopplung im Arbeitsbetrieb erforderlichen Spalt zu verkleinern oder gar zu eliminieren. Bei der Verwendung einer hantelförmigen Bolzendurchgangsöffnung sind somit beispielsweise zwei Rundlochausnehmungen über einen Längsschlitz miteinander verbunden. In beiden Stellungen, in denen der Anschlagbolzen durch eine der beiden, idealerweise gleich großen, Bolzendurchgangsöffnungen geführt ist, ergibt sich somit der gleiche Verstellbereich, innerhalb dessen noch eine Dämpfung und kein Formschluss erfolgt.

Die Verwendung eines Anschlagbolzens in der Formschlusskupplung der Wegbegrenzungseinrichtung ist allerdings nicht zwingend. Alternativ ist es beispielsweise auch möglich, dass sie wenigstens einen ersten Anschlag am Maschinenrahmen und wenigstens einen zweiten Anschlag am Fahrstandaufbau umfasst, die in Anheberichtung zumindest teilweise einander überlappend ausgebildet sind. Am Fahrstandaufbau und am Maschinenrahmen sind somit wenigstens zwei übereinanderliegende Anschläge in der Weise vorhanden, dass sie beim Anheben der Baumaschine in Anlage aneinander gelangen, wobei der Anschlag beziehungsweise das Anschlagelement des Maschinenrahmens dann auf dem Anschlag des Fahrstandaufbaus aufliegt. Durch diese Anordnung kann die Formschlusskupplung weiter vereinfacht und im Übrigen belastbarer ausgebildet werden, da hier auf ein Zwischenelement, wie beispielsweise einen Anschlagbolzen, verzichtet werden kann. Zur konkreten Umsetzung dieser Weiterbildung kann grundsätzlich auf ein breites Spektrum konstruktiver Alternativen zurückgegriffen werden. Bevorzugt ist es dabei allerdings, wenn die Wegbegrenzungseinrichtung und insbesondere die Formschlusskupplung einen Anschlag in Form einer Durchgangsöffnung, insbesondere im Maschinenrahmen, und ein Anschlagelement in Form einer Anschlagnase, insbesondere am Fahrstandaufbau, aufweist, wobei die Anschlagnase in die Anschlagöffnung zumindest teilweise im Wesentlichen quer zur Anheberichtung der Baumaschine hineinragt. Alternativ ist es auch möglich, die Lage der Anschlagnase im Maschinenrahmen und die der Durchgangsöffnung im Fahrstandaufbau vorzusehen. Unter Anschlagnase wird vorliegend all das zusammengefasst, das zum Eingriff in und idealerweise sogar Durchgriff durch die Durchgangsöffnung geeignet ist. Die Anschlagnase und die Durchgangsöffnung sind weiter bevorzugt einstückig mit dem Fahrstandaufbau und dem Maschinenrahmen ausgebildet, wodurch einerseits die Anzahl der erforderlichen Bauteile reduziert und in der Regel die Belastbarkeit der Wegbegrenzungseinrichtung erhöht werden kann.

Grundsätzlich sind die vorhandenen Anschlagelemente vorzugsweise wenigstens paarweise ausgebildet, so dass beim Anheben der Baumaschine die Wegbegrenzungseinrichtung und insbesondere die Formschlusskupplung die Hebekraftübertragung gleichzeitig an mehreren Stellen der Formschlusskupplung stattfindet.

Die Wegbegrenzungseinrichtung und insbesondere die Formschlusskupplung ist bevorzugt in der Weise ausgebildet, dass beim Anheben der Baumaschine der Formschluss automatisch beziehungsweise selbsttätig erfolgt, wobei es grundsätzlich auch möglich ist, dass die Formschlusskupplung aktiv vom Bediener der Baumaschine betätigt wird. Ersteres hat allerdings den Vorteil, dass der durch die erfindungsgemäße Formschlusskupplung erreichte Entlastungseffekt des wenigstens einen Dämpfungselementes unabhängig von menschlichem Zutun erfolgt und somit besonders betriebssicher ist. Die Formschlusskupplung ist dabei weiter bevorzugt in der Weise ausgebildet, dass sie automatisch bei Erreichen einer festgelegten Maximalverstellung des Fahrstandaufbaus gegenüber dem Maschinenrahmen zumindest in Anheberichtung der Baumaschine greift. Die Maximalverstellung wird dabei sinnvollerweise derart festgelegt, dass bei ihrem Erreichen noch keine Schädigung des wenigstens einen Dämpfungselementes eintritt.

Die erfindungsgemäße Begrenzungseinrichtung und insbesondere die Formschlusskupplung und der damit ermöglichte direkte Kraftfluss zwischen dem Fahrstandaufbau und dem Maschinenrahmen beziehungsweise der Kraftfluss zwischen dem Fahrstandaufbau und dem Maschinenrahmen unter Umgehung einer weiteren Belastung des wenigstens einen Dämpfungselementes erlauben die Anordnung wenigstens einer Anhängeeinrichtung, insbesondere Transportlasche, am Fahrstandaufbau oder zumindest in fester Verbindung mit dem Fahrstandaufbau und damit an einem hinsichtlich Zugänglichkeit, Krafteinleitung (insbesondere im Hinblick auf resultierende Kippmomente) und/oder resultierendem Kraftfluss günstigen Anbindungspunkt. Unter einer Transportlasche oder dergleichen wird ein Maschinenelement verstanden, an dem eine Zugkraft bzw. Hebekraft aufgebracht werden kann. Hierzu kann die Transportlasche z. B. eine Öse oder mehrere Ösen aufweisen, in die ein Kranhaken oder dergleichen eingreifen kann. Eine bevorzugte Ausgestaltung der erfindungsgemäßen Baumaschine sieht vor, dass diese nur eine einzige Transportlasche aufweist, wobei diese einzige Transportlasche am schwingungsentkoppelten Fahrstandaufbau angeordnet ist. Durch die hieraus resultierende Einpunktaufhängung ist eine sehr einfache Handhabung beim Anheben, Verladen oder dergleichen möglich.

Besonders bevorzugt ist vorgesehen, dass die Anhängeeinrichtung, insbesondere die Transportlasche, an einer zum Fahrstandaufbau gehörenden Lenkträgersäule angeordnet ist. Die Lenkträgersäule ist dabei der mit der Grundplatte des Fahrstandaufbaus verbundene Teil, an dem das Lenkrad oder weitere Lenkeinrichtung an der Baumaschine angeordnet ist. Die Lenkträgersäule steht dabei häufig zu wesentlichen Teilen säulenartig in Vertikalrichtung nach oben von der Grundplatte ab und weist in ihrem oberen Bereich ein Lenkrad und/oder weitere Bedienelement, wie beispielsweise ein Armaturenbrett, auf. In vorteilhafter Weise ist die Transportlasche damit an einer ohnehin an der Baumaschine vorhandenen und exponiert positionierten Komponente angeordnet, so dass zur Anbindung der Transportlasche keine zusätzlichen Bauteile an der erfindungsgemäßen Baumaschine vorzusehen sind. Durch die Anordnung der Transportlasche an der Lenkträgersäule, wobei die Lenkträgersäule bezüglich der Länge und/oder Breite der Baumaschine insbesondere im Wesentlichen mittig angeordnet sein kann, kann z. B. der Kraftangriffspunkt im Hinblick auf die Vermeidung resultierender Kippmomente näher an den Schwerpunkt und idealerweise in Vertikalrichtung über den Schwerpunkt der Baumaschine herangeführt werden, was jedoch nicht zwingend der Fall sein muss. Damit ist nur eine einzige Anhängeeinrichtung, insbesondere Transportlasche, erforderlich, um eine Anhebeeinrichtung an die Baumaschine anzukoppeln. Es hat sich gezeigt, dass eine Anordnung der Anhängeeinrichtung in der Weise, dass der Kraftangriffspunkt für die Anhebeeinrichtung in der Horizontalebene in einem Umkreis von weniger als 100 mm und insbesondere von weniger als 60 mm und idealerweise über dem Massenschwerpunkt der Baumaschine, optimale Ergebnisse liefert.

Die Anhängeeinrichtung, insbesondere die Transportlasche, kann ferner verstellbar, beispielsweise verschwenkbar und/oder klappbar, am Fahrstandaufbau und insbesondere an der Lenkträgersäule angeordnet sein. Auf diese Weise kann die Anhängeeinrichtung aus dem Blickfeld des Bedieners der Baumaschine im Arbeitsbetrieb entfernt werden, wenn sie nicht benötigt wird.

Die vorteilhaften Effekte der Erfindung treten ganz besonders deutlich hervor, wenn die Baumaschine eine Tandemwalze, insbesondere mit einem Betriebsgewicht von bis zu 6,0 t, bevorzugt von bis zu 5,0 t ist.

Die Erfindung wird nachfolgend anhand der schematischen Figuren beispielhaft und in nicht einschränkender Weise näher erläutert. Gleiche Bauteile oder zumindest gleich wirkende Bauteile sind dabei mit gleichen Bezugszeichen angegeben. Im Einzelnen zeigen die Figuren:
- Fig. 1: eine perspektivische Schrägansicht auf eine Tandemwalze;
- Fig. 2: eine perspektivische Schrägansicht auf die Lagereinrichtung zwischen Maschinenrahmen und Fahrstandaufbau aus Fig. 1;
- Fig. 3: eine Ausschnittsvergrößerung auf den Bereich der Formschlusskupplung aus Fig. 2;
- Fig. 4: eine Schnittansicht durch die Formschlusskupplung aus Fig. 3;
- Fig. 5: eine perspektivische Schrägansicht auf eine alternative Ausführung einer Lagereinrichtung zwischen Maschinenrahmen und Fahrstandaufbau;
- Fig. 6a und 6b: eine Querschnittsansicht sowie Ausschnittsvergrößerung durch den Fahrstandaufbau und den Maschinenrahmen aus Fig. 5 in Arbeitsposition; und
- Fig. 7a und 7b: eine Querschnittsansicht sowie Ausschnittsvergrößerung durch den Fahrstandaufbau und den Maschinenrahmen aus Fig. 5 in angehobener Position.

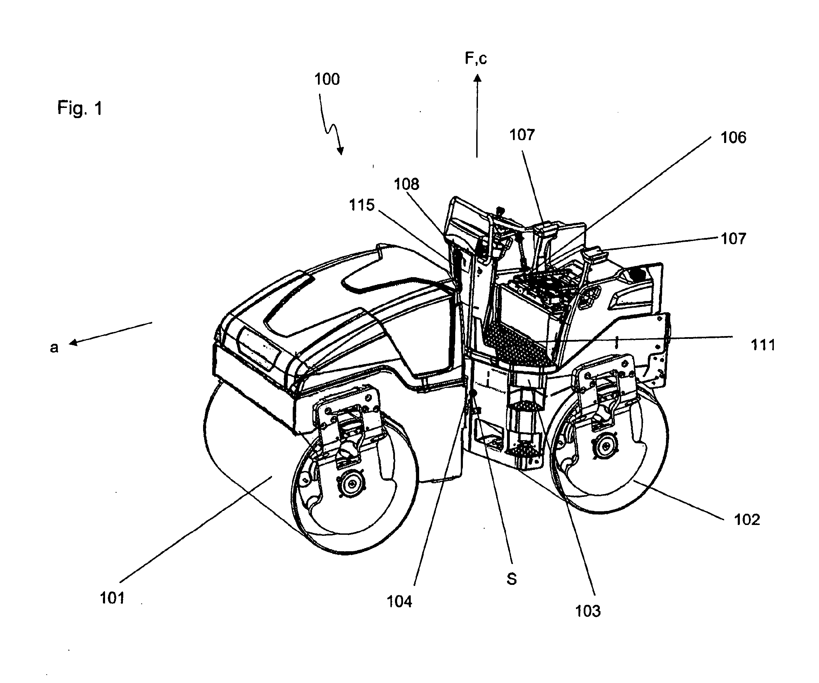

Fig. 1 zeigt eine Tandemwalze 100 als Beispiel einer selbstfahrenden Baumaschine. Die Tandemwalze 100 weist eine Vorderbandage 101 und eine Hinterbandage 102 auf, die an einem Maschinenrahmen 103 gelagert sind. Der Maschinenrahmen 103 umfasst zwei über ein Knickgelenk 104 miteinander verbundene Maschinenrahmensegmente, wobei das eine Segment die Vorderbandage 101 und das andere Segment die Hinterbandage 102 trägt. Das in Vorwärtsrichtung a vorne liegende Segment weist ferner eine Haube auf, wohingegen am hinteren Segment des Maschinenrahmens 103 ein Fahrstandaufbau 106 angeordnet ist.

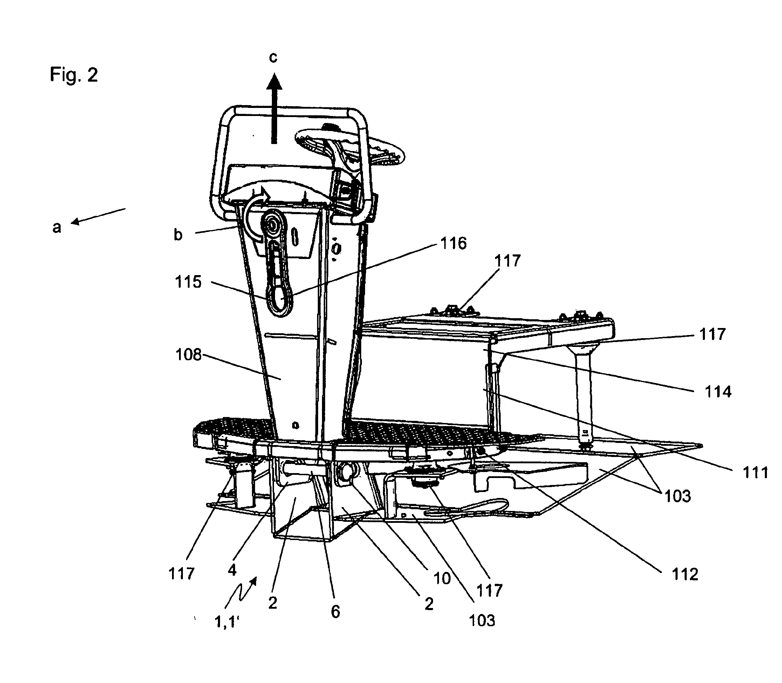

Im Arbeitsbetrieb sitzt der Bediener auf dem Fahrstandaufbau 106, wobei vorliegend der dort üblicherweise vorhandenen Sitz aus Übersichtlichkeitsgründen nicht dargestellt ist. Sichtbar sind allerdings die beiden Armstützen 107. Der Fahrstandaufbau 106 umfasst ferner eine in Vertikalrichtung aufragende Lenkträgersäule 108, an deren oberem Ende ein Lenkrad und ein Armaturenbrett angeordnet sind. Weitere Details zum Fahrstandaufbau 106 ergeben sich insbesondere aus Fig. 2.

Fig. 2 verdeutlicht hierzu den grundsätzlichen Aufbau des Fahrstandaufbaus 106 und dessen Lagerung am Maschinenrahmen 103 der Tandemwalze 100. Tragendes Element des Fahrstandaufbaus 106 ist eine Boden- beziehungsweise Grundplatte 111, die vorliegend einen horizontalen Fußbereich 112 (mit aufgelegtem Trittbrett), einen dazu in Vertikalrichtung nach oben versetzten horizontalen Sitzbereich 113 und einen in Form einer vertikalen Wand erhaltenen und die Bereiche 112 und 113 verbindenden Verbindungsbereich 114 umfasst, wobei die Teile 112, 113 und 114 fest zusammenhängend, idealerweise einstückig, ausgebildet sind und in ihrer Gesamtheit die Bodenplatte 111 bilden. Auf der Bodenplatte 111 sind weitere Elemente des Fahrstandaufbaus angeordnet, beispielsweise der nicht weiter dargestellte Sitz im hinteren Bereich und die Lenkträgersäule 108. Die Lenkträgersäule ragt in Vertikalrichtung nach oben und steht in diese Richtung über den Fußbereich 112 vor. Neben dem Lenkrad und dem Armaturenbrett ist ferner eine als Transportlasche 115 ausgebildete Anhängeeinrichtung an der Lenkträgersäule 108 angeordnet. Fig. 2 zeigt die Transportlasche 115 in ihrer herab geschwenkten Position. Zu Transportzwecken kann die Transportlasche 115 in Pfeilrichtung b herauf geschwenkt werden. Zum Einhängen an beispielsweise eine Krankette weist die Transportlasche 115 eine Transportöse 116 auf, durch die ein entsprechender beispielsweise mit einem Kran verbundener Haken oder ähnliches gefädelt werden kann. Die Lenkträgersäule 108 ist fest mit der Bodenplatte 111 des Fahrstandaufbaus 106 verbunden. Selbstverständlich ist es beispielsweise auch möglich, die Transportöse 116 an der Lenkträgersäule 108 feststehend auszubilden.

Der Fahrstandaufbau 106 ist auf dem Maschinenrahmen 103 gelagert, wobei die Lagerung schwingungsgedämpft beziehungsweise schwingungsentkoppelt (d.h. die am Maschinenrahmen 103 auftretenden Schwingungen werden nicht eins zu eins sondern, wenn überhaupt, gedämpft auf den Fahrstandaufbau 106 weitergeleitet) ist. Insbesondere die im Arbeitsbetrieb über die Erregereinheiten der beiden Bandagen 101 und 102 entwickelten Schwingungen werden somit, wenn überhaupt, gedämpft auf die Grund- beziehungsweise Bodenplatte 111 und auf den gesamten weiteren Fahrstandaufbau 106 übertragen. Die Bodenplatte 111 ist dazu über insgesamt vier Dämpfungselemente 117 am in diesem Bereich ebenfalls gestuft ausgebildeten Maschinenrahmen 103 (in Fig. 2 ist lediglich der der Bodenplatte 111 gegenüberliegende Teil des Maschinenrahmens 103 gezeigt) gelagert. Bei den Dämpfungselementen 117 handelt es sich konkret um geeignete Gummielemente, durch deren elastische Verformbarkeit somit eine Relativbewegung des Fahrstandaufbaus 106 gegenüber dem Maschinenrahmen 103 zur Schwingungsdämpfung ermöglicht wird. Die Dämpfungselemente 117 gewährleisten im Betrieb der Tandemwalze 100 in einem bestimmten Bereich eine elastische Abkopplung des Fahrstandaufbaus 106 gegenüber dem Maschinenrahmen 103. Die von der Grundplatte 111 aufragende Lenkträgersäule 108 ist mit der Grundplatte 111 verschweißt.

Der Schwerpunkt der Tandemwalze 100 ist in Fig. 1 grob mit S angegeben und liegt in Vertikalrichtung im Wesentlichen unterhalb der Transportlasche 115. Durch diese Ausbalancierung ist es möglich, die Tandemwalze 100 über eine Einpunktaufhängung an der Transportlasche 115 anzuheben, ohne dass die Tandemwalze 100 in gravierende Schieflage gerät. Die vertikale Kraftangriffslinie der Hebekraft F (bzw. deren Verlängerung) verläuft dabei im Wesentlichen durch den Schwerpunkt S der Tandemwalze 100, weshalb die Tandemwalze 100 beim Anheben nicht verkippt. Indem die Transportlasche 115 an der ohnehin an der Tandemwalze 100 vorhandenen und bezüglich des Kraftangriffspunkts der Hebekraft F günstigen Lenkträgersäule 108 befestigt ist, sind keine zusätzlichen Baukomponenten zur Anbringung der Transportlasche 115 erforderlich.

Beim Anheben der Tandemwalze 100 lastet das gesamte Gewicht der Tandemwalze an der Transportlasche 115. Um nun zu verhindern, dass die Dämpfungselemente 117 mit dem Gesamtgewicht des Maschinenrahmens 103 und der von den Dämpfungselementen 117 weg weiter an ihm hängenden Elementen (beispielsweise Bandagen inklusive Erregereinheit) belastet beziehungsweise überlastet werden (dies könnte beim konkreten Ausführungsbeispiel im Einzelfall Gewichtsbelastungen der Dämpfungselemente 117 von zusammen mehr als 4t bedeuten), ist eine Wegbegrenzungseinrichtung 1 in Form einer Formschlusskupplung 1' vorhanden, die eine Verstellwegbegrenzung des Fahrstandaufbaus 106 gegenüber dem Maschinenrahmen 103 in Anheberichtung c darstellt und eine Kraftumleitung der Zugkraft von beim Anheben der Baumaschine 100 an den Dämpfungselemente 117 lastenden Zugkräften auf die wesentlich belastbarere Formschlusskupplung 1' ermöglicht.

Der grundsätzliche Aufbau der Wegbegrenzungseinrichtung ergibt sich insbesondere weiter aus den Figuren 2 bis 7b, wobei die Figuren 2 bis 4 und die Figuren 5 bis 7b lediglich beispielhaft zwei unterschiedliche Ausführungsalternativen betreffen.

Zunächst soll die in den Figuren 2 bis 4 näher angegebene Ausführungsalternative beschrieben werden. Die Formschlusskupplung 1' ist zwischen dem Fahrstandaufbau 106 und dem Maschinenrahmen 103 angeordnet, wobei die wesentlichen Elemente der Formschlusskupplung 1' beim vorliegenden Ausführungsbeispiel nahezu auf einer Vertikalen mit dem Schwerpunkt S und der Transportlasche 115 liegen. Die Formschlusskupplung 1' wird erst beim Anheben der Tandemwalze 100, dann allerdings automatisch und selbsttätig, wirksam und ermöglicht einen direkten Kraftfluss zwischen dem Fahrstandaufbau 106 und dem Maschinenrahmen 103 unter Umgehung der Dämpfungselemente 117. Dadurch ist sichergestellt, dass die Belastung der Dämpfungselemente 117 beim Anheben der Baumaschine nicht über deren Maximalbelastung liegt. Beim Anheben der Baumaschine 100 in Anheberichtung c wird dabei die vorgesehene Maximalauslenkung des Fahrstandaufbaus 106 gegenüber dem Maschinenrahmen 103 erreicht, wobei die an diesem Punkt herrschende Zugbelastung der Dämpfungselemente 117 auch bei aktivierter Formschlusskupplung erhalten bleibt. Die Maximalauslenkung wird durch die Ausbildung der Formschlusskupplung 1' festgelegt. Diese Zugbelastung ist allerdings wesentlich kleiner als die für ein Anheben der Baumaschine erforderliche Hebekraft und daher vernachlässigbar. Beim Anheben der Baumaschine 100 übernimmt die Formschlusskupplung 1' somit unter Vermeidung einer Überbelastung der Dämpfungselemente 117 die Kraftweiterleitung zwischen Maschinenrahmen 103 und Fahrtstandaufbau 106. Die Formschlusskupplung 1' verhindert entsprechend eine Beschädigung der Dämpfungselemente 117, die konstruktionsbedingt nicht für hohe Zugkräfte ausgelegt sind, und ermöglicht zudem auch einen im Wesentlichen umlenkungsfreien Kraftfluss zwischen dem Fahrstandaufbau 106 bzw. der Lenkträgersäule 108 und dem Maschinenrahmen 103.

Die wesentlichen Elemente der Formschlusskupplung 1' sind vom Maschinenrahmen 103 aufstehende Halteschenkel 2 mit jeweils einer Bolzendurchgangsöffnung 3, die koaxial zueinander angeordnet sind, von der Boden- beziehungsweise Grundplatte 111 des Fahrstandaufbaus 106 zum Maschinenrahmen 103 vorstehende Halteschenkel 4 mit jeweils einer Bolzendurchgangsöffnung 5, wobei die Halteschenkel 2 und 4 jeweils paarweise vorhanden sind und in Horizontalrichtung in eine Richtung (Bolzeneinschubrichtung; quer zur Vorwärtsrichtung) jeweils überlappend ausgebildet sind, und ein Anschlagbolzen 6, der durch die Bolzendurchgangsöffnungen 3 und 5 hindurchgeführt ist. Der Anschlagbolzen 6 überragt in Axialrichtung des Bolzens 6 die in Axialrichtung zu beiden Seiten außen liegenden Halteschenkel 2 am Maschinenrahmen 103 und ist an beiden Seiten gegen eine Verschiebung in Axialrichtung gesichert (konkret über geeignete Scheibenelemente 10 und/oder Schraubköpfe 8 und 9, deren Durchmesser größer ist als der Durchmesser der Bolzendurchgangsöffnungen 3 der Halteschenkel 2.

Die Figuren 2, 3 und 4 zeigen dabei jeweils die Formschlusskupplung 1' im entkuppelten Zustand, beispielsweise wenn die Tandemwalze 100 auf dem Boden aufsteht. Der Anschlagbolzen 6 kann sich innerhalb der Bolzendurchgangsöffnungen 5, insbesondere in vertikaler Richtung (und vorliegend auch in horizontaler Richtung), frei bewegen und wird letztendlich lediglich gegen eine Axialverschiebung gesichert. Die Bolzendurchgangsöffnung 5 umläuft den Anschlagbolzen 6 somit mit einem Abstand. In der Bolzendurchgangsöffnung 3 ist der Anschlagbolzen 6 dagegen in Vertikalrichtung festgelegt und fest in dieser Führung gelagert. Die Lage des Fahrstandaufbaus 106 beziehungsweise der Bodenplatte 111 gegenüber dem Maschinenrahmen 103 wird wesentlich durch die Dämpfungselemente 117 gewährleistet, die den Fahrstandaufbau 106 am Maschinenrahmen 103 elastisch in Position halten. Die Formschlusskupplung 1' ist dabei in der Weise ausgebildet, dass der Anschlagbolzen 6 im Ruhezustand der stehenden Baumaschine 100 zentrisch durch die Bolzendurchgangsöffnungen 5 verläuft. Auf diese Weise ist sichergestellt, das eine Dämpfung des Fahrstandaufbaus 106 gegenüber dem Maschinenrahmen 103 über die Dämpfungselemente 117 sowohl in Vertikalrichtung als auch in und entgegen der Arbeitsrichtung möglich ist.

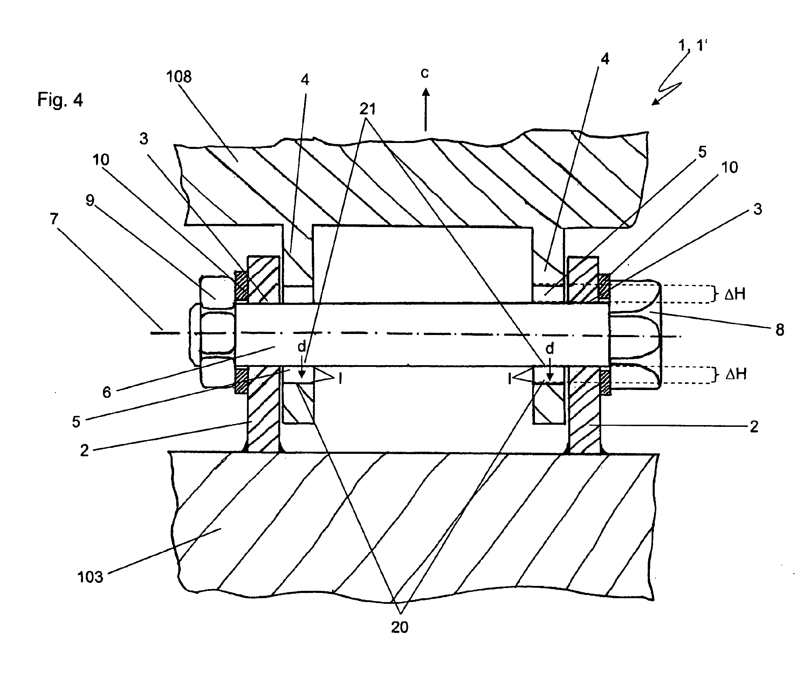

Beim Anheben der Tandemwalze 100 in Anheberichtung c (beispielsweise durch einen Anziehen eines in die Transportlasche 115 eingeklinkten Kranhakens) wird der Fahrstandaufbau 106 zunächst, zumindest im Bereich der Formschlusskupplung 1', in einem begrenzten Verstellbereich relativ gegenüber dem Maschinenrahmen 103 angehoben. Diese Relativbewegung findet so lange statt, bis der Anschlagbolzen 6 an die unteren Öffnungsränder der Bolzendurchgangsöffnungen 5 anschlägt, wie es durch die Pfeile d in der Querschnittsansicht aus Fig. 4 angedeutet ist. Der Rand der Bolzendurchgangsöffnung 5 bildet in Anheberichtung c somit einen ersten Anschlag 20 gegenüber dem durch den Anschlagbolzen 6 gebildeten zweiten beziehungsweise Gegenanschlag 21. Die Anschlagstelle ist in Fig. 4 mit I gekennzeichnet. Die Grenzen dieses Verstellbereiches werden durch den Abstand ΔH des Anschlagbolzens 6 zu den jeweiligen Anschlägen an den Bolzendurchgangsöffnungen 5 in Anheberichtung c festgelegt. Je schmaler ΔH ist, desto frühzeitiger erfolgt der Formschluss und umgekehrt. Sobald das Anschlagelement beziehungsweise der zweite Anschlag 21 (konkret der Anschlagbolzen 6) der Formschlusskupplung 1' an den ersten Anschlag 20 (konkret den Randbereich der Bolzendurchgangsöffnungen 5) anschlägt und einen Formschluss herstellt, ist eine Fortsetzung der Relativbewegung zwischen dem Maschinenrahmen 103 und dem Fahrstandaufbau 106 in Anheberichtung c durch die Formschlusskupplung 1' gesperrt. Die an der Transportlasche 115 aufgebrachte Hebekraft F kann dann über diesen Formschluss unter Umgehung der Dämpfungselemente 117 direkt in den Maschinenrahmen 103 eingeleitet werden. Der durch die Formschlusskupplung 1' herbeiführbare Formschluss kann insofern auch als direkter Formschluss zwischen dem Fahrstandaufbau 106 und dem Maschinenrahmen 103 bezeichnet werden.

Gleichermaßen kann die Formschlusskupplung 1' bei auftretenden Extrembelastungen im Betrieb der vorliegend als Tandemwalze 100 ausgebildeten Baumaschine auch als Abreißschutz für den Fahrstandaufbau 106 dienen. Dies kann ein bedeutender Sicherheitsaspekt sein. Im Weiteren kann die Formschlusskupplung 1' auch als mechanisches Anschlagelement dienen, das, beispielsweise zum Schutz der Dämpfungselemente 117, den maximalen Schwingweg des Fahrstandaufbaus 106 relativ zum Maschinenrahmen 103 begrenzt, wobei der Anschlagbolzen 6 sowohl an die oberen Ränder als auch an die untere Ränder der Bolzendurchgangsöffnungen 5 anschlagen kann.

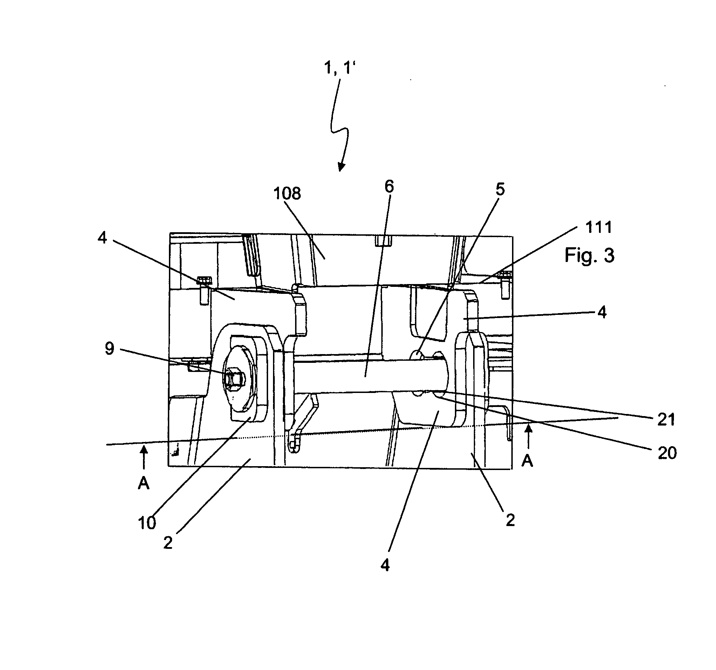

Weitere Details der Erfindung, insbesondere im Hinblick auf den Aufbau und die Wirkweise der Formschlusskupplung 1', ergeben sich insbesondere auch aus der Querschnittsansicht der Formschlusskupplung 1' aus Fig. 4, wobei der Anschlagbolzen 6 mit seinen stirnseitigen Endabschnitten in nicht geschnittener Weise dargestellt ist. Fig. 4 ist eine Schnittansicht entlang der Schnittlinie A-A aus Fig. 3. Fig. 4 verdeutlicht insbesondere die Anordnung des Anschlagbolzens 6 und dessen Relativposition und Wirkweise als Anschlagelement (zweiter Anschlag 21) zu den in den Halteschenkeln 2 und 4 angeordneten Bolzendurchgangsöffnungen 3 und 5. Die Bolzenachse des Anschlagbolzens 6 verläuft in der Horizontalebene und senkrecht zur Anheberichtung c. Der Anschlagbolzen 6 ist durch die beiden Bolzendurchgangsöffnungen 3 der fest mit dem Maschinenrahmen 103 verbundenen Halteschenkel 2 und durch die Bolzendurchgangsöffnungen 5 der fest mit der Bodenplatte 111 des Fahrstandaufbaus 108 verbundenen Halteschenkel 4 hindurchgeführt und steht zu beiden Seiten in Axialrichtung jeweils über eine der Außenseiten der Halteschenkel 2 vor. Stirnseitig ist ein Bolzenkopf 8 und eine auf den Anschlagbolzen 6 aufgeschraubte Mutter 9 vorhanden, die an jeweils einer Sicherungsscheibe 10 anliegen. Der Anschlagbolzen 6 ist entsprechend leicht demontierbar in die Formschlusskupplung 1' eingebaut. Die Sicherungsscheiben 10 sind derart bemessen, dass sie im Durchmesser größer als die Bolzendurchgangsöffnungen 3 und 5 sind, wodurch der Anschlagbolzen 6 insgesamt gegen eine Axialverschiebung gesichert ist. Die Bolzenlängsachse 7 verläuft somit horizontal und senkrecht zur Kraftangriffslinie der Hebekraft in Anheberichtung c. Ein weiteres wesentliches Merkmal der Formschlusskupplung 1' liegt darin, dass der Zylinderaußenmantel des Anschlagbolzens 6 bei der in Fig. 4 gezeigten Betriebstellung (d.h. die Tandemwalze 100 steht auf dem Boden auf und kann oder wird betrieben) mit dem Abstand ΔH zum Rand der Bolzendurchgangsöffnungen 5 in Radialrichtung zur Bolzenachse 7 beabstandet ist. Der Abstand ΔH wird dadurch erhalten, dass der Durchmesser des Anschlagbolzens 6 um den Betrag 2*(ΔH) kleiner ist als der Durchmesser der Bolzendurchgangsöffnungen 5, die vorliegend die gleichen Dimensionierungen aufweisen. Der Anschlagbolzen liegt mit anderen Worten nicht an der Bolzendurchgangsöffnung 5 an, so dass der Fahrstandaufbau 108 gegenüber dem Maschinenrahmen 103 bewegbar ist.

Nachstehend soll nun die Wirkweise der Formschlusskupplung auch anhand der Querschnittsdarstellung aus Fig. 4 weiter erläutert werden. Wird die Tandemwalze 100 über die Transportlasche 115 in Anheberichtung c angehoben, erfolgt zunächst eine Relativbewegung des Fahrstandaufbaus 108 gegenüber dem Maschinenrahmen 103 in Richtung c, wobei sich der Anschlagbolzen 6 in Pfeilrichtung d dem jeweiligen Rand der Bolzendurchgangsöffnung 5 annähert. Sobald der Anschlagbolzen 6 am jeweiligen Rand anschlägt (und somit ein Formschluss an der Anschlagstelle I zwischen dem ersten Anschlag 20 und dem zweiten Anschlag 21 erhalten wird) und damit beim Anheben automatisch ein Formschluss in der Formschlusskupplung 1' eintritt, erfolgt die Kraftweiterleitung der Anhebekraft unmittelbar über die Formschlusskupplung 1' (konkret in der Weise Maschinenrahmen 103 - Halteschenkel 2 - Anschlagbolzen 6 - Halteschenkel 4 - Fahrstandaufbau 108 - Transportlasche 115). Wesentlich ist somit, dass in der angehobenen Stellung der Fahrstandaufbau 108 über die durch die Anlage des zweiten Anschlags 21 am ersten Anschlag 20 erhaltene Anschlagstelle I direkt am Maschinenrahmen 103 anliegt und somit eine Zugkraftübertragung unter Umgehung der Dämpfungselemente 117 erhalten wird. Der Anschlagbolzen 6 ist dabei im Wesentlichen auf Scherung beansprucht. Sobald die Tandemwalze 100 wieder auf dem Boden aufgesetzt wird, gelangt die Formschlusskupplung 1' abermals selbsttätig außer Eingriff und die Dämpfungselemente 117 können ihre Lager- und Dämpfungsfunktion wieder aufnehmen.

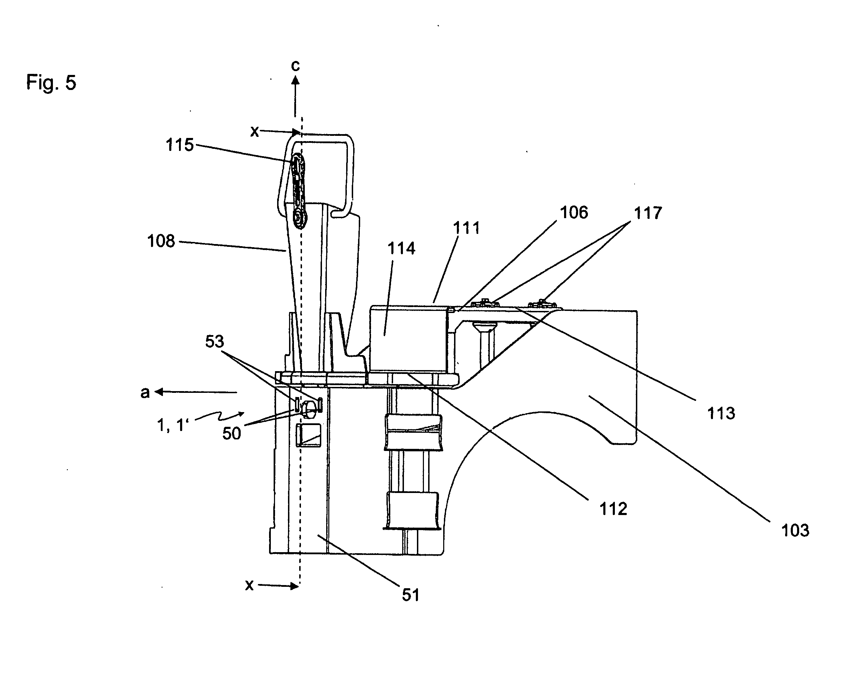

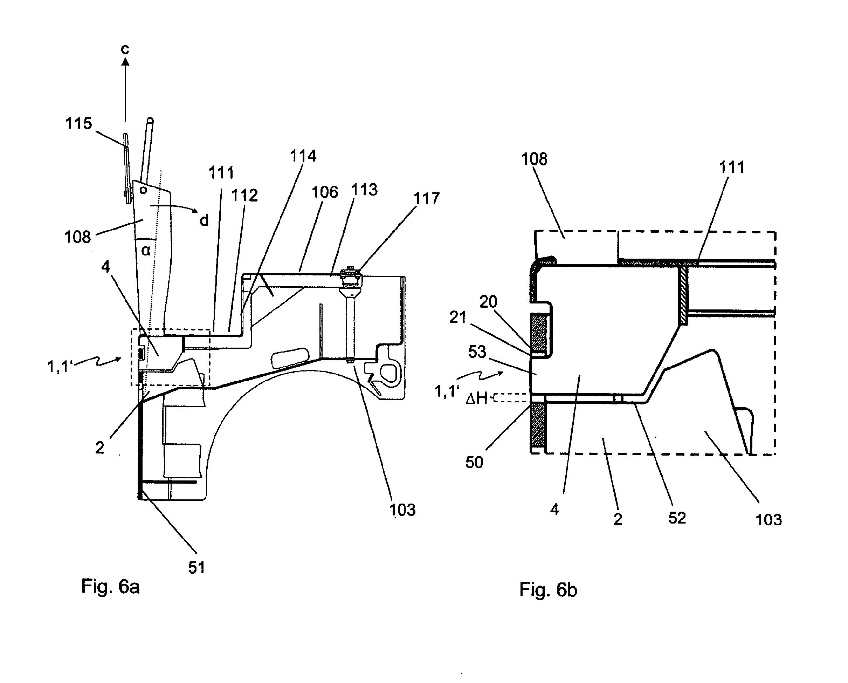

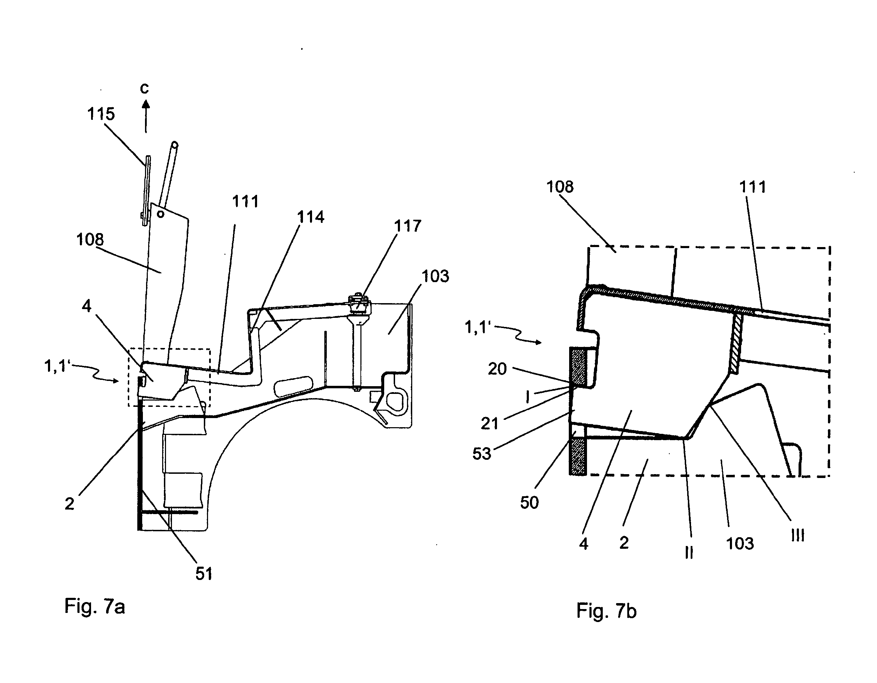

Die Figuren 5 bis 7b betreffen eine alternative Ausbildung der Formschlusskupplung 1', wobei nachstehend lediglich auf die Unterschiede eingegangen werden wird und ansonsten hinsichtlich des Aufbaus und der Funktionsweise der Formschlusskupplung 1' und der weiteren Elemente der Baumaschine 100 auf die vorstehenden Ausführungen Bezug genommen wird. Wie auch Fig. 2, zeigen die Figuren 5 bis 7b lediglich einen Teil der Baumaschine 100 aus Fig. 1, nämlich den Maschinenrahmen 103 (hinteres Segment) und den auf dem Maschinenrahmen 103 aufmontierten Fahrstandaufbau 106. Fig. 5 ist dabei eine perspektivische Schrägansicht, Fig. 6a eine Schnittansicht durch Fig. 5 entlang der Schnittebene x-x (Schnittebene in Vertikalrichtung und in Längsrichtung beziehungsweise entgegen Richtung a durch Fig. 5), Fig. 7a eine Schnittansicht durch Fig. 5 im angehobenen Zustand und die Figuren 6b und 7b sind jeweils Ausschnittsvergrößerungen des gestrichelt eingerahmten Bereichs aus den Figuren 6a und 7a, die insbesondere den Aufbau und die Funktionsweise der Formschlusskupplung 1' zwischen dem Fahrstandaufbau 106 und dem Maschinenrahmen 103 verdeutlichen.

Der wesentliche Unterschied im Aufbau der Formschlusskupplung 1' liegt darin, dass die in den Figuren 5 bis 7b gezeigte Ausführungsform keinen separaten Anschlagbolzen aufweist, sondern allein integral beziehungsweise einstückig mit dem Maschinenrahmen 103 und dem Fahrstandaufbau 106 ausgebildete Elemente umfasst, die insbesondere auch den ersten Anschlag 20 und den zweiten Anschlag 21 der Formschlusskupplung 1' bilden. Der Maschinenrahmen 103 und der Fahrstandaufbau 106 sind mit anderen Worten in der Weise ausgebildet, dass sie im montierten Zustand gemeinsam und ohne zusätzliche Elemente die Formschlusskupplung 1' bilden. Die benötigten Anschläge 20 und 21 der Formschlusskupplung 1' sind jeweils integral und einstückig mit dem Fahrstandaufbau 106 oder dem Maschinenrahmen 103 ausgebildet.

Die Formschlusskupplung 1' gemäß der Ausführungsform in den Figuren 5, 6a, 6b, 7a und 7b umfasst am Maschinenrahmen 103 zwei nebeneinander angeordnete und vom Maschinenrahmen 103 im Bereich der Lenksäule 108 aufragende Halteschenkel 2, die bezüglich ihrer Oberseite in Vorwärtsrichtung a jeweils in eine Durchgangsöffnung 50 in einer Frontplatte 51 des Maschinenrahmens 103 münden. Die Halteschenkel 2 verlaufen somit in Vorwärtsrichtung a in der Horizontalebene von einem innerhalb des Maschinenrahmens 103 liegenden Bereich bis an den Rand des Maschinenrahmens 103 und münden jeweils an ihrer Oberseite in die Durchgangsöffnung 50. Die Oberseite 52 der Halteschenkel 2 ist als Abstützfläche in nachstehend noch näher beschriebener Weise ausgebildet. Gegenelement der Formschlusskupplung 1' am Fahrstandaufbau 106 zu den Elementen "Halteschenkel 2" und "Durchgangsöffnung 50" am Maschinenrahmen 103 sind die beiden von der Unterseite des Fahrstandaufbaus 106 nach unten vorstehenden Halte- beziehungsweise Abstützschenkel 4. Diese sind in Vertikalrichtung jeweils einen Halteschenkel 2 überlappend angeordnet und weisen neben einer Anlagefläche 52 ferner eine Anschlag- beziehungsweise Eingriffnase 53 auf, die in der Horizontalebene beziehungsweise im wesentlichen quer zur Anheberichtung c durch die Durchgangsöffnung 50 hindurch geführt ist. Insgesamt verlaufen die beiden Anschlagnasen 53 somit in der Art zweier Gabelzinken zueinander, die die Durchgangsöffnungen 50 in der Frontplatte 51 des Maschinenrahmens 103 in Fahrtrichtung a durchragen und nahezu bündig mit der Frontplatte 51 abschließen. Fig. 5 verdeutlicht dabei, dass die Durchgangsöffnungen 50 hinsichtlich ihrer Breite (horizontal quer zur Fahrtrichtung a) und Höhe (Erstreckung in Vertikalrichtung) größer als die Anschlagnasen 53 ausgebildet sind, so dass die Anschlagnasen 53 innerhalb eines bestimmten Bereiches kontaktfrei gegenüber dem Innenrand der Durchgangsöffnungen 50 bewegt werden können. Dies ist beispielsweise im Arbeitsbetrieb der Baumaschine erwünscht, wenn eine Schwingungsentkopplung zwischen dem Fahrstandaufbau 106 und dem Maschinenrahmen 103 durch die Dämpfungselemente 117 erreicht werden soll. Die Beabstandung ist mit ΔH angegeben.

Die Funktionsweise dieser Formschlusskupplung 1' ist in einer Zusammenschau der Figuren 6a, 6b, 7a und 7b weiter beschrieben. Die Figuren 6a und 6b entsprechen der in Fig. 5 (und in Fig. 1) dargestellten Situation, in der die Baumaschine 100 auf dem Boden aufsteht und im vorliegenden Fall beispielsweise zu Verdichtungsarbeiten herangezogen werden kann. Die Figuren 7a und 7b betreffen dagegen die Transportsituation, in der die Baumaschine über die Transportlasche 115 an eine Anhebevorrichtung, beispielsweise an einen Kran, angehängt ist und somit mit ihren Bandagen nicht mehr auf dem Untergrund aufsteht. Wie vorstehend bereits erwähnt, erfolgt das Anheben dabei allein über die Transportlasche 115 entsprechend einer Einpunktaufhängung.

Grundsätzlich ist die Baumaschine idealerweise in der Weise ausgebildet, dass der Maschinenschwerpunkt S in der Horizontalebene im Lot oder zumindest möglichst nah zum Lot zur Transportlasche 115 liegt, um ein möglichst momentfreies Anheben der Baumaschine 100 zu ermöglichen. Beim Anheben der Baumaschine 100 schwenkt die in der Arbeitsstellung leicht nach vorn geneigte Lenksäule 108 zunächst um den Winkel α (in einer Vertikalebene in Arbeitsrichtung a) nach hinten beziehungsweise der Fahrstandaufbau inklusive Lenksäule 108 knickt um diesen Winkel relativ zum Maschinenrahmen 103 in seiner Mitte ein. Dazu ist der Verlauf der Vorderseite der Lenksäule 108 aus Fig. 7a in Fig. 6a gepunktet angegeben. Ein Vergleich der Figuren 6a/6b mit den Figuren 7a/7b verdeutlicht, dass der Fahrstandaufbau 106 gegenüber dem Maschinenrahmen 103 eine Einknickbewegung in Pfeilrichtung d durchführt. Durch diese Schwenkbewegung der Lenksäule 108 gelangt der bis dahin allein über die Dämpfungselemente 117 (die in Fahrtrichtung a vorderen Dämpfungselemente sind hier nicht sichtbar aber in ihrem Aufbau und ihrer Anordnung identisch mit der in Fig. 2 gezeigten Ausführungsform) am Maschinenrahmen 103 gelagerte Fahrstandaufbau 106 im Bereich der Formschlusskupplung 1' in Anschlagposition und ist bei einer Fortsetzung der Anhebebewegung in Richtung c gegenüber dem Maschinenrahmen 103 festgestellt. Konkret erfolgt dazu ein Eingreifen der Formschlusskupplung 1', wobei der Fahrstandaufbau 106 am Maschinenrahmen 103 gleich mehrfach anschlägt. Dies verdeutlichen insbesondere die Figuren 6b und 7b.

Durch die Einknickbewegung des Fahrstandaufbaus 106 drehen sich auch die Halteschenkel 4 zusammen mit ihren Anschlagnasen 53 um eine horizontale Drehachse quer zur Arbeitsrichtung a. Durch diese Drehbewegung schlägt die Anschlagnase 53 mit ihrer den Anschlag 21 bildenden Oberseite am von der Unterseite der Durchgangsöffnung 50 im Maschinenrahmen 103 gebildeten Anschlag 20 an. Die Besonderheit der vorliegenden Ausführungsform der Formschlusskupplung 1' liegt nun darin, dass der Fahrstandaufbau 106 zusätzlich mit seinen Halteschenkeln 4 an die Halteschenkel 2, konkret ihrer Oberseite 52, anschlägt und damit den Fahrstandaufbau 106 gegenüber dem Maschinenrahmen 103 verkeilt. Die Halteschenkel 2 am Maschinenrahmen und die Halteschenkel 4 am Fahrstandaufbau sind somit paarweise in Vertikalrichtung einander überlappend beziehungsweise übereinanderliegend angeordnet, so dass sich die Halteschenkel 2 auf den Halteschenkeln 4 beim Anheben der Baumaschine 100 abstützen können.

Wesentlich ist ferner, dass die Halteschenkel 2 und 4 paarweise gleich mehrfach aneinander anschlagen. Die im vorliegenden Ausführungsbeispiel insgesamt drei Anschlagstellen pro Halteschenkelpaar 2/4 zwischen dem Fahrstandaufbau 106 und dem Maschinenrahmen 103 sind in Fig. 7b mit I, II und III angegeben. Die Zugkraftüberleitung vom Fahrtstandaufbau 106 in den Maschinenrahmen 103 erfolgt im wesentlichen am Anschlag I. Am Anschlag I liegt der obere Rand der Durchgangsöffnung 50 (Anschlag 20) auf der Oberseite der Anschlagnase 53 (Anschlagelement 21) auf. Bei den Anschlägen II und III drückt jeweils ein Halteschenkel 2 des Maschinenrahmens 103 mit seiner Oberseite gegen die Unterseite jeweils eines Halteschenkels 4 des Fahrstandaufbaus, was durch die relative Kippbewegung des Fahrstandaufbaus 106 in diesem Bereich gegenüber dem Maschinenrahmen 103 hervorgerufen wird. Durch die in der Art eines Widerlagers beziehungsweise Kippanschlages ausgebildeten Anschläge II und III wird somit eine Kippbegrenzung erhalten, die den Schwenkweg des Maschinenrahmens 106 relativ zum Fahrstandaufbau 103 begrenzen. Dadurch können Ungenauigkeiten in der Massenschwerpunktlage der Baumaschine 100 beim Anheben sehr effizient ausgeglichen werden. Gleichzeitig wird über die Anschläge II und III ein Herausrutschen des Fahrstandaufbaus 106 aus dem Maschinenrahmen 103 beziehungsweise ein Verrutschen der Elemente der Formschlusskupplung 1' verhindert.

Wird die Baumaschine 100 wieder auf dem Untergrund aufgesetzt, gelangt die Formschlusskupplung 1' automatisch außer Eingriff. Die Lagerung der Fahrstandaufbaus 106 erfolgt dann wieder allein über die Dämpfungselemente 117. Die Halteschenkel 2 und 4 sind dagegen zueinander um den Abstand ΔH in Vertikalrichtung beabstandet, so dass eine Schwingungsdämpfung vom Maschinenrahmen 103 zum Fahrstandaufbau 106 über die Dämpfungselemente 117 gewährleistet ist. Dazu sind insbesondere auch die Anschlagnasen umlaufend zum Innenrand der Durchgangsöffnung 50 beabstandet und ragen kontaktfrei durch die Durchgangsöffnung 50.

Es versteht sich im Übrigen von selbst, dass die Elemente der Formschlusskupplung 1' selbstverständlich auch in Bezug auf den Maschinenrahmen 103 und den Fahrstandaufbau 106 beispielsweise vertauscht werden können. Entscheidend ist, dass eine Wegbegrenzung, idealerweise über eine Formschlusskupplung, bereits gestellt wird, über die eine Zugentlastung beziehungsweise die Vermeidung einer Überbelastung der Dämpfungselemente 117 beim Anheben der Maschine über die Lenksäule 108 erreicht wird.

## Patentansprüche

1. Baumaschine (100), insbesondere Straßenbaumaschine, mit einem Maschinenrahmen (103) und einem Fahrstandaufbau (106), der gegenüber dem Maschinenrahmen (103) mit wenigstens einem Dämpfungselement (117) schwingungsentkoppelt ist, **dadurch gekennzeichnet, dass** die Baumaschine eine Anhängeeinrichtung (115) zum Anheben der Baumaschine (100) hat, wobei die Anhängeeinrichtung (115) am Fahrstandaufbau (106) angeordnet ist, und wobei
eine Wegbegrenzungseinrichtung (1) vorhanden ist, die den Verstellweg des Fahrstandes gegenüber dem Maschinenrahmen begrenzt, und in der Weise ausgebildet ist, dass sie beim Anheben der Baumaschine (100) über die Anhängeeinrichtung (115) die Belastung des wenigstens einen Dämpfungselementes (117) begrenzt, eine übermäßige Zugbelastung des wenigstens einen Dämpfungselementes (117) beim Anheben der Baumaschine (100) verhindert und einen direkten Kraftfluss zwischen dem Fahrstandaufbau (106) und dem Maschinenrahmen (103) ermöglicht.

2. Baumaschine (100) nach Anspruch 1,
**dadurch gekennzeichnet,**
**dass** die Wegbegrenzungseinrichtung eine, insbesondere zwischen dem schwingungsentkoppelten Fahrstandaufbau (106) und dem Maschinenrahmen (103) wirksame, Formschlusskupplung (1') umfasst, die beim Anheben der Baumaschine (100) über die Anhängeeinrichtung (15) durch Herbeiführung eines Formschlusses den direkten Kraftfluss zwischen dem Fahrstandaufbau (106) und dem Maschinenrahmen (103) ermöglicht.

3. Baumaschine (100) nach Anspruch 2,
**dadurch gekennzeichnet,**
**dass** die Formschlusskupplung (1') wenigstens einen ersten Anschlag (20) und wenigstens einen zweiten Anschlag (21) aufweist, die zueinander in der Weise ausgebildet sind, dass der wenigstens erste Anschlag (20) am wenigstens zweiten Anschlag (21) beim Anheben der Baumaschine (100) anschlägt und eine weitere Relativbewegung des Fahrstandaufbaus (106) zum Maschinenrahmen (103) in Anheberichtung (c) verhindert.

4. Baumaschine (100) nach einem der Ansprüche 2 oder 3,
**dadurch gekennzeichnet,**
**dass** die Formschlusskupplung (1') wenigstens einen Anschlag (20) am Fahrstandaufbau (106) und wenigstens einen Anschlag (21) am Maschinenrahmen (103) umfasst.

5. Baumaschine (100) nach einem der Ansprüche 2 bis 4,
**dadurch gekennzeichnet,**
**dass** der wenigstens zweite Anschlag (21) ein Anschlagbolzen (6) ist, der beim Anheben der Baumaschine an den wenigstens ersten Anschlag (3) zur Anlage gelangt, wobei insbesondere am Fahrstandaufbau (106) ein Halteschenkel (4) mit einer Bolzendurchgangsöffnung (5) und am Maschinenrahmen (103) zumindest teilweise überlappend ein Halteschenkel (2) mit einer Bolzendurchgangsöffnung (3) angeordnet ist, und dass durch beide Bolzendurchgangsöffnungen (3, 5) der Anschlagbolzen (6) in der Weise hindurchgeführt ist, dass er beim Anheben der Baumaschine (100) am Rand der beiden Bolzendurchgangsöffnungen (3, 5) anliegt.

6. Baumaschine (100) nach Anspruch 5,
**dadurch gekennzeichnet,**
**dass** die Bolzenachse (7) des Anschlagbolzens (6) senkrecht zur Kraftrichtung einer Hebekraft (F) verläuft.

7. Baumaschine (100) nach einem der Ansprüche 1 bis 4,
**dadurch gekennzeichnet,**
**dass** die Wegbegrenzungseinrichtung (1) und insbesondere die Formschlusskupplung (1') wenigstens einen ersten Anschlag (20) am Maschinenrahmen (103) und wenigstens einen zweiten Anschlag (21) am Fahrstandaufbau (106) umfasst, die in Anheberichtung zumindest teilweise einander überlappend ausgebildet sind.

8. Baumaschine (100) nach einem der Ansprüche 1 bis 4 oder 7,
**dadurch gekennzeichnet,**
**dass** die Wegbegrenzungseinrichtung (1) und insbesondere die Formschlusskupplung (1') ein ersten Anschlag (20) in Form einer Durchgangsöffnung (50), insbesondere im Maschinenrahmen (103), und einen zweiten Anschlag (21) in Form einer Anschlagnase (53), insbesondere am Fahrstandaufbau (106), aufweist, wobei die Anschlagnase (53) in die Durchgangsöffnung (50) zumindest teilweise im Wesentlichen quer zur Anheberichtung der Baumaschine hineinragt.

9. Baumaschine (100) nach einem der vorhergehenden Ansprüche,
**dadurch gekennzeichnet,**
**dass** die Elemente der Wegbegrenzungseinrichtung (1) und insbesondere der Formschlusskupplung (1') einstückig mit dem Fahrstandaufbau (106) und dem Maschinenrahmen (103) ausgebildet sind.

10. Baumaschine (100) nach einem der vorhergehenden Ansprüche,
**dadurch gekennzeichnet,**
**dass** die Wegbegrenzungseinrichtung (1) wenigstens eine Kippbegrenzung umfasst, die eine Kippbewegung des Fahrstandaufbaus (106) relativ zum Maschinenrahmen (103) begrenzt.

11. Baumaschine (100) nach einem der vorausgehenden Ansprüche,
**dadurch gekennzeichnet,**
**dass** die Anhängeeinrichtung eine Transportlasche (115) ist, die am schwingungsentkoppelten Fahrstandaufbau (106) befestigt ist.

12. Baumaschine (100) nach einem der vorhergehenden Ansprüche,
**dadurch gekennzeichnet,**
**dass** sie wenigstens eines der folgenden Merkmale aufweist:
a) die Anhängeeinrichtung und insbesondere die Transportlasche (115) ist an einer mit dem Fahrstandaufbau (106) verbundenen Lenkträgersäule (108) angeordnet;
b) die Transportlasche (115) ist verschwenkbar und/oder klappbar am Fahrstandaufbau (106) und insbesondere an der Lenkträgersäule (108) angeordnet.

13. Baumaschine (100) nach einem der vorhergehenden Ansprüche,
**dadurch gekennzeichnet,**
**dass** sie eine Tandemwalze mit einem Betriebsgewicht von bis zu 6,0 und insbesondere bis zu 5,0t ist.

## Claims

1. A construction machine (100), in particular a road construction machine, having a machine frame (103) and an operator platform structure (106) which is vibration-decoupled in relation to the machine frame (103) using at least one damping element (117),
**characterized in that**
the construction machine (100) has a hitch device (115) for lifting the construction machine (100), the hitch device (115) being arranged on the operator platform structure (106), and a travel limiting device (1) being provided, which limits the displacement travel of the operator platform in relation to the machine frame, and which is implemented in such a manner that, upon lifting of the construction machine (100) via the hitch device (115), it limits the load on the at least one damping element (117), prevents excess traction load on the at least one damping element (117) upon lifting of the construction machine (100), and allows a direct force flow between the operator platform structure (106) and the machine frame (103).

2. The construction machine (100) according to claim 1,
**characterized in that**
the travel limiting device comprises a formfitting coupling (1'), which is active in particular between the vibration-decoupled operator platform structure (106) and the machine frame (103), and which allows the direct force flow between the operator platform structure (106) and the machine frame (103) upon lifting of the construction machine (100) via the hitch device (15) by causing a form fit.

3. The construction machine (100) according to claim 2,
**characterized in that**
the formfitting coupling (1') has at least one first stop (20) and at least one second stop (21), which are formed in relation to one another in such a manner that the at least one first stop (20) strikes against the at least one second stop (21) upon lifting of the construction machine (100) and prevents a further relative movement of the operator platform structure (106) to the machine frame (103) in the lifting direction (c).

4. The construction machine (100) according to any one of claims 2 or 3,
**characterized in that**
the formfitting coupling (1') comprises at least one stop (20) on the operator platform structure (106) and at least one stop (21) on the machine frame (103).

5. The construction machine (100) according to any one of claims 2 to 4,
**characterized in that**
the at least one second stop (21) is a stop bolt (6), which comes into contact on the at least one first stop (3) upon lifting of the construction machine, with in particular a holding leg (4) having a bolt passage opening (5) being arranged on the operator platform structure (106) and a holding leg (2) having a bolt passage opening (3) being arranged at least partially overlapping on the machine frame (103), and that the stop bolt (6) is guided through both bolt passage openings (3, 5) in such a manner that it rests against the edge of the two bolt passage openings (3, 5) upon lifting of the construction machine (100).

6. The construction machine (100) according to claim 5,
**characterized in that**
the bolt axis (7) of the stop bolt (6) extends perpendicularly to the force direction of a lifting force (F).

7. The construction machine (100) according to any one of claims 1 to 4,
**characterized in that**
the travel limiting device (1) and in particular the formfitting coupling (1') comprises at least one first stop (20) on the machine frame (103) and at least one second stop (21) on the operator platform structure (106), which are implemented as at least partially overlapping one another in the lifting direction.

8. The construction machine (100) according to any one of claims 1 to 4 or 7,
**characterized in that**
the travel limiting device (1) and in particular the formfitting coupling (1') has a first stop (20) in the form of a passage opening (50), in particular in the machine frame (103), and a second stop (21) in the form of a stop lug (53), in particular on the operator platform structure (106), the stop lug (53) protruding at least partially into the passage opening (50) essentially transversely to the lifting direction of the construction machine.

9. The construction machine (100) according to any one of the preceding claims,
**characterized in that**
the elements of the travel limiting device (1) and in particular of the formfitting coupling (1') are formed in one piece with the operator platform structure (106) and the machine frame (103).

10. The construction machine (100) according to any one of the preceding claims,
**characterized in that**
the travel limiting device (1) comprises at least one tilt limit, which limits a tilting movement of the operator platform structure (106) relative to the machine frame (103).

11. The construction machine (100) according to any one of the preceding claims,
**characterized in that**
the hitch device is a transport shackle (115), which is fastened on the vibration-decoupled operator platform structure (106).

12. The construction machine (100) according to any one of the preceding claims,
**characterized in that**
it has at least one of the following features:
a) the hitch device and in particular the transport shackle (115) is arranged on a steering support column (108) connected to the operator platform structure (106);
b) the transport shackle (115) is arranged so it is pivotable and/or foldable on the operator platform structure (106) and in particular on the steering support column (108).

13. The construction machine (100) according to any one of the preceding claims,
**characterized in that**
it is a tandem roller having an operating weight of up to 6.0 tons and in particular up to 5.0 tons.

## Revendications

1. Engin de chantier (100), en particulier machine pour la construction de routes, comprenant un châssis de machine (103) et une structure (106) de plateforme pour un conducteur qui est à découplage vibratoire en relation avec le châssis (103) de machine grâce à au moins un élément amortisseur (117),
**caractérisé en ce que**
l'engin de chantier (100) comprend un dispositif d'attelage (115) pour soulever l'engin de chantier (100), le dispositif d'attelage (115) étant situé sur la structure (106) de plateforme pour le conducteur, et un dispositif limiteur de course (1) étant prévu, qui limite la course de déplacement de la plateforme pour le conducteur par rapport au châssis de la machine, et qui est mis en oeuvre de telle sorte que, lorsqu'on soulève l'engin de chantier (100) grâce au dispositif d'attelage (115), il limite la charge sur ledit au moins un élément amortisseur (117), empêche une charge de traction excessive sur ledit au moins un élément amortisseur (117) lorsqu'on soulève l'engin de chantier (100) et permet un flux de forces direct entre la structure (106) de plateforme pour le conducteur et le châssis (103) de machine.

2. Engin de chantier (100) selon la revendication 1,
**caractérisé en ce que**
le dispositif limiteur de course comprend une liaison (1') par accouplement de formes, qui est active en particulier entre la structure (106) de plateforme pour le conducteur à découplage vibratoire et le châssis (103) de machine, et qui permet le flux de forces direct entre la structure (106) de plateforme pour le conducteur et le châssis (103) de machine lorsqu'on soulève l'engin de chantier (100) via le dispositif d'attelage (115) par formation d'un accouplement de formes.

3. Engin de chantier (100) selon la revendication 2,
**caractérisé en ce que**
la liaison (1') par accouplement de formes comprend au moins une première butée (20) et au moins une deuxième butée (21), qui sont formées l'une par rapport à l'autre de telle sorte que ladite au moins une première butée (20) vient buter contre ladite au moins une deuxième butée (21) lorsqu'on soulève l'engin de chantier (100) et empêche un déplacement relatif de la structure (106) de plateforme pour le conducteur par rapport au châssis (103) de machine dans la direction (c) de levage.

4. Engin de chantier (100) selon l'une quelconque des revendications 2 ou 3,
**caractérisé en ce que**
la liaison (1') par accouplement de formes comprend au moins une butée (20) sur la structure (106) de plateforme pour le conducteur et au moins une butée (21) sur le châssis (103) de machine.

5. Engin de chantier (100) selon l'une quelconque des revendications 2 à 4,
**caractérisé en ce que**
ladite au moins une deuxième butée (21) est un boulon d'arrêt (6) qui vient en contact avec ladite au moins une première butée (3) lorsqu'on soulève l'engin de construction, avec en particulier un bras de retenue (4) présentant une ouverture (5) de passage pour un boulon et disposé sur la structure (106) de plateforme pour le conducteur, et un bras de retenue (2) présentant une ouverture (3) de passage pour un boulon et disposé recouvrant au moins partiellement le châssis (103) de machine, et **en ce que** le boulon d'arrêt (6) est guidé à travers les deux ouvertures (3, 5) de passage pour un boulon d'une manière telle qu'il s'appuie contre le bord des deux ouvertures (3, 5) de passage pour un boulon lorsqu'on soulève l'engin de chantier (100).

6. Engin de chantier (100) selon la revendication 5,
**caractérisé en ce que**
l'axe (7) du boulon d'arrêt (6) s'étend perpendiculairement à la direction d'une force de levage (F).

7. Engin de chantier (100) selon l'une quelconque des revendications 1 à 4,
**caractérisé en ce que**
le dispositif limiteur de course (1), et en particulier la liaison (1') par accouplement de formes, comprend au moins une première butée (20) sur le châssis (103) de machine et au moins une deuxième butée (21) sur la structure (106) de plateforme pour le conducteur, qui sont mises en oeuvre comme se recouvrant au moins partiellement l'une par rapport à l'autre dans la direction de levage.

8. Engin de chantier (100) selon l'une quelconque des revendications 1 à 4 ou 7,
**caractérisé en ce que**
le dispositif limiteur de course (1), et en particulier la liaison (1') par accouplement de formes, comprend une première butée (20) prenant la forme d'une ouverture de passage (50), en particulier dans le châssis (103) de machine, et une deuxième butée (21) prenant la forme d'un talon d'arrêt (53), en particulier sur la structure (106) de plateforme pour le conducteur, le talon d'arrêt (53) faisant saillie au moins partiellement dans l'ouverture de passage (50) de manière essentiellement transversale à la direction de levage de l'engin de chantier.

9. Engin de chantier (100) selon l'une quelconque des revendications précédentes,
**caractérisé en ce que**
les éléments du dispositif limiteur de course (1), et en particulier de la liaison (1') par accouplement de formes, sont réalisés d'une seule pièce avec la structure (106) de plateforme pour un conducteur et le châssis (103) de machine.

10. Engin de chantier (100) selon l'une quelconque des revendications précédentes,
**caractérisé en ce que**
le dispositif limiteur de course (1) comprend au moins une limitation d'inclinaison, qui limite le mouvement d'inclinaison de la structure (106) de plateforme pour un conducteur par rapport au châssis (103) de machine.

11. Engin de chantier (100) selon l'une quelconque des revendications précédentes,
**caractérisé en ce que**
le dispositif d'attelage est une manille de transport (115) qui est fixée sur la structure (106) de plateforme pour un conducteur à découplage vibratoire.

12. Engin de chantier (100) selon l'une quelconque des revendications précédentes,
**caractérisé en ce que**
il possède au moins l'une des caractéristiques suivantes :
(a) le dispositif d'attelage, et en particulier la manille de transport (115), est disposé sur une colonne de support de direction (108) réunie à la structure (106) de plateforme pour le conducteur;
(b) la manille de transport (115) est agencée de manière à être pivotante et/ou repliable sur la structure (106) de plateforme pour le conducteur, et en particulier sur la colonne de support de direction (108).

13. Engin de chantier (100) selon l'une quelconque des revendications précédentes,
**caractérisé en ce que**
il s'agit d'un rouleau tandem ayant une masse en exploitation allant jusqu'à 6,0 tonnes, et en particulier jusqu'à 5,0 tonnes.
